# EUROPEAN PATENT APPLICATION

(11) **EP 3 798 950 A1**
(43) Date of publication of application: **31.03.2021**
(21) Application number: 20189503.4
(22) Date of filing: 05.08.2020
(51) Int. Cl.: G06Q 10/06

(54) **MANAGEMENT AND AGGREGATION OF TICKET DATA FROM MULTIPLE SOURCES**

(30) Priority: 30.09.2019 US 201916587133
(71) Applicant: Rockwell Automation Technologies, Inc., Mayfield Heights, OH 44124-6188 (US)
(72) Inventor: Mayer, John D., Mayfield Heights, OH 44124 (US); Harkins, Lauren M., Mayfield Heights, OH 44124 (US); Korpela, Jessica L., Mayfield Heights, OH 44124 (US); Truong, Jessica M., Mayfield Heights, OH 44124 (US); Smith, Lisa J., Mayfield Heights, OH 44124 (US); Roark, Gwendolyn H., Mayfield Heights, OH 44124 (US); Paramasivam, Ramesh, Mayfield Heights, OH 44124 (US); Carroll, Matthew M., Mayfield Heights, OH 44124 (US); Lillie, David, Mayfield Heights, OH 44124 (US)
(74) Representative: Grünecker Patent- und Rechtsanwälte PartG mbB

(57) **Abstract**

Systems, methods, and software described herein manage tickets in an industrial automation environment. In one implementation, a ticket management service is configured to obtain a plurality of tickets from a plurality of data sources and extract attributes from each ticket in the plurality of tickets. Once extracted, the ticket management service may, for each ticket in the plurality of tickets, generate at least one ticket in a unified format and add the at least one ticket to a ticket database. The ticket management service may then use the ticket database to present ticket summaries to users associated with the industrial automation environment.

## Description

### BACKGROUND

Organizations often employ industrial hardware that includes various types of components supplied by multiple vendors. This hardware may include sensors, drives, pumps, filters, drills, motors, robots, mills, printers, carousels, fabrication machinery, or any other industrial automation equipment. For example, a first industrial automation device may employ first hardware that is supplied by first group of suppliers, while a second industrial automation device may employ second hardware that is supplied by a second group of suppliers. To provide updates, configure, and fix the automation systems, an organization may be required to communicate tickets to the suppliers or other personnel managing the automation systems to implement the required operation. These tickets may each be generated in a proprietary format associated with the corresponding vendor, wherein each vendor may require different fields, a different structure of information, or some other difference in the format. The tickets may indicate the hardware/software associated with the issue, the type of issue encountered, a timestamp, or any other similar information.

As the different hardware devices within an environment expand, managing the tickets that corresponds to each of the devices can be difficult and cumbersome. These difficulties are often compounded with changes to ticket procedures for various vendors, management of the responses to the tickets, and various other dynamic changes in an environment and the ticket process.

### OVERVIEW

Provided herein are systems and methods to manage tickets in a hardware environment. In one implementation, a method includes obtaining a plurality of tickets from a plurality of data sources, wherein the plurality of tickets corresponds to two or more formats. The method further includes extracting attributes from each ticket in the plurality of tickets and, for each ticket, generating at least one ticket in a unified format and adding the at least one ticket to a ticket database. The method also provides generating a ticket summary based on the ticket database.

### BRIEF DESCRIPTION OF THE DRAWINGS

Many aspects of the disclosure can be better understood with reference to the following drawings. While several implementations are described in connection with these drawings, the disclosure is not limited to the implementations disclosed herein. On the contrary, the intent is to cover all alternatives, modifications, and equivalents.
Figure 1 illustrates a computing environment to manage tickets for an industrial equipment environment according to an implementation.
Figure 2 illustrates an operation of a ticket management service according to an implementation.
Figure 3 illustrates an operational scenario of generating a common ticket form database according to an implementation.
Figure 4 illustrates an operational scenario of distributing tickets for an industrial environment according to an implementation.
Figure 5 illustrates an operational scenario of generating ticket display according to an implementation.
Figure 6 illustrates a user interface to provide ticket information according to an implementation.
Figure 7 illustrates a ticket management computing system according to an implementation.

### DETAILED DESCRIPTION

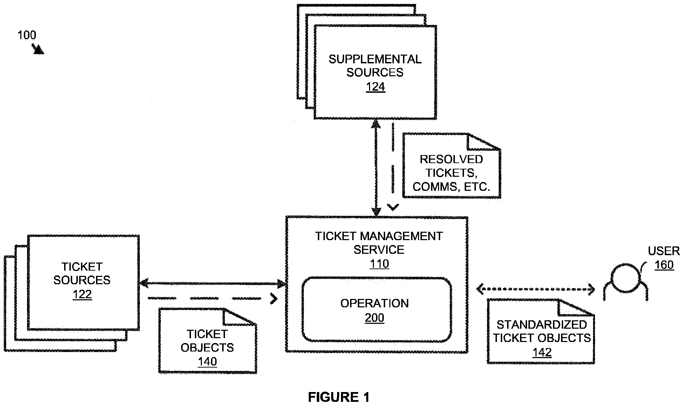

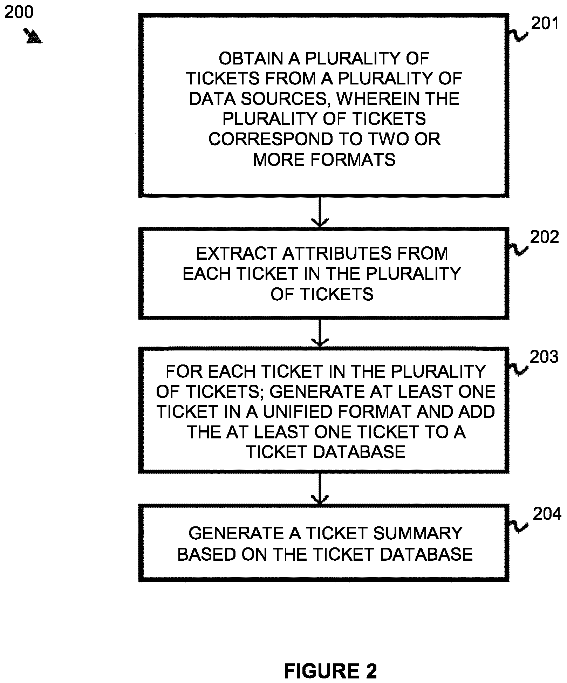

Figure 1 illustrates a computing environment 100 to manage tickets for an industrial equipment environment according to an implementation. Computing environment 100 includes ticket sources 122, supplemental sources 124, ticket management service 110, and user 160. Computing environment 100 further includes ticket objects 140 and standardized ticket objects 142. Ticket management service 110 provides operation 200, which is further described below in Figure 2.

Industrial environments often include a variety of equipment and associated software to provide required operations of an organization. This equipment may include sensors, drives, pumps, filters, drills, motors, robots, mills, printers, carousels, fabrication machinery, or any other industrial automation equipment. As the equipment is deployed, an organization is required to provide updates, configure, maintain, and fix the hardware and software associated with the equipment. In some implementations, users or automated processes may generate tickets that indicate operations required by the equipment. These tickets may provide an identifier for the component or components associated with the ticket, information about the reasoning for the ticket, a classification of the ticket, a severity level, a timestamp, or some other information associated with ticket. In some examples, tickets for different components of the industrial environment may correspond to different formats based on the vendor that supplied the component. For example, software for first equipment may require a ticket in a first format, while second equipment may require a ticket in a second format.

As depicted in computing environment 100, ticket sources 122 may provide ticket objects 140 to ticket management service 110. Ticket management service 110 may be provided with ticket objects 140 as they are generated by ticket sources 122, may be provided with tickets objects 140 at intervals, may be provided with ticket objects 140 in response to requests from ticket management service 110, or by some other means or interval. Ticket sources 122 may correspond to end user computing systems, server computing systems, or some other system capable of maintaining or generating tickets associated with an industrial environment. For example, ticket management service 110 may request and obtain tickets that were generated as part of two different services. Ticket management service 110 may then use the obtained ticket objects to generate standardized ticket objects 142 that places the ticket objects in a single format that can be provided to user 160.

In some implementations, in converting the ticket objects 140 from the plurality of first formats to a common format, ticket management service 110 may further use supplemental sources 124 that can be used to provide additional information for the ticket. This additional information may include information related to resolved tickets, communications associated with the ticket type, or some other information. For example, when a ticket is identified from ticket sources 122, the ticket may indicate a type associated with the ticket. Based on the type, ticket management service 110 may generate a standardized ticket object that includes the information extracted from the ticket and further provides additional information from related tickets that share the ticket type. The additional information may include responses to the ticket, communications with a vendor about a previous ticket, or some other information.

Figure 2 illustrates an operation 200 of a ticket management service according to an implementation. The processes of operation 200 are referenced parenthetically in the paragraphs that follow with reference to systems and elements of computing environment 100 of Figure 1.

As depicted, ticket management service 110 initiates operation 200 to obtain (201) a plurality of tickets from a plurality of data sources. The data sources may correspond to end user computing devices capable of generating tickets, serving systems capable of hosting the tickets, or some other data source. The tickets may be obtained as they are generated, periodically, based on a request from the ticket management service, or at some other interval. As the plurality of tickets are obtained, operation 200 further extracts (202) attributes from each ticket in the plurality of tickets. In some implementations, the attributes may include a vendor associated with the ticket, a severity of the ticket, a ticket type, user comments associated with the ticket, or some other information.

Once the attributes are extracted, operation 200 may, for each ticket in the plurality of tickets, generate (203) at least one ticket in a unified format and add the at least one ticket to a ticket database. In some examples, the generation of the ticket in the unified format may include assembling the attributes extracted from the original ticket into a sequence that can be shared with tickets from other vendors. In some examples, this assembling may include modifying the format of a particular attribute. For example, a severity rating scale associated with a first vendor may not correspond to the severity scale of another vendor. Consequently, when generating the unified format, ticket management service 110 may normalize the value such that it can be stored relative to tickets associated with other vendors.

After normalizing or standardizing the tickets to a common format, ticket management service 110 may generate (204) a ticket summary based on the ticket database. In some implementations, the summary may comprise a visual representation of the various tickets for an industrial environment and may be displayed in response to a request from an administrator of the industrial environment. The summary may indicate the quantity of open tickets, the quantity of closed tickets, a list and brief summary of the tickets, or some other information related to the tickets. In some examples, the summary may be searchable by the requesting administrator, wherein searching may correspond to a search box, sortable columns, or some other search mechanism. For example, the administrator may select to order the tickets based on a severity rating associated with the tickets. As a result, during a first period, the tickets may be organized based on a first attribute, while during a second period, the tickets may be organized based on a second attribute.

In some implementations, when generating the normalized ticket, the ticket may include information from supplemental sources 124, wherein supplementary sources 124 may correspond to storage of resolved tickets, communications corresponding to tickets, users or personnel associated with previous tickets or ticket types, or some other information. For example, when a ticket is obtained from ticket sources 122, ticket management service 110 may extract attributes from the ticket to be added to a standardized ticket. Additionally, the attributes may be used to identify supplemental information from supplemental sources 124 that corresponds to information associated with previously resolved tickets. The supplemental information may be added to the standardized ticket and may include user identifiers for users associated with the ticket type, previous operations to respond to the ticket type, communications related to the ticket or ticket type, or some other information identified from supplemental sources 124.

Although demonstrated in the example of Figure 2 as obtaining tickets from multiple sources corresponding to multiple formats, it should be understood that an operation may be used to generate the tickets in the different formats. In an example, ticket management service 110 may obtain tickets in a first format and convert the tickets from the first format to two or more other formats. For instance, a user may generate a ticket in the first format. In response to obtaining the ticket, ticket management service 110 may identify one or more vendors associated with the ticket and generate one or more tickets in a second format that correspond to the one or more vendors. Advantageously, rather than requiring administrators and users to generate tickets using different formats associated with different vendors, ticket management service may provide a single format, extract attributes from the single format, and generate tickets that correspond to the formats associated with the various vendors. These tickets may then be provided to one or more computing systems or elements that are associated with each of the vendors.

While described in the previous examples using physical equipment, it should be understood that similar operations may be performed with respect to services, such as technical support services, software services, or some other services. In particular, tickets may identify when services are required to be renewed, when services are required to be upgraded, or some other ticket generation event. The tickets may be generated manually for the database or may be generated by inspecting current service level agreements, contracts, or other information associated with the services. For example, ticket management service 110 may identify a service level agreement for software support and may identify an expiration date for the agreement. From the date, ticket management service 110 may generate a new ticket that indicates that the service level agreement should be resolved prior to the expiration date.

In addition to, or in place of, providing the operations with respect to services, ticket management service 110 may further provide automation in generating tickets associated with physical equipment. In particular, ticket management service 110 may gather information about when physical equipment was installed, determine life-span information associated with the equipment (through user input, extractions from manuals or webpages, from other environments, etc.), and generate tickets that correspond to the life-span information. The tickets may then be stored in a common format with any other tickets for the environment.

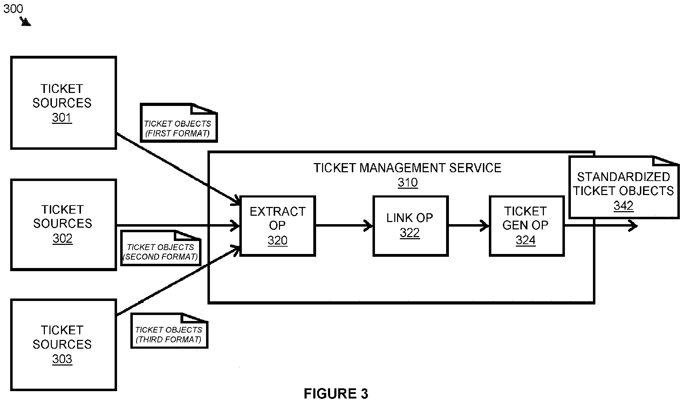

Figure 3 illustrates an operational scenario 300 of generating a common ticket form database according to an implementation. Operational scenario 300 includes ticket sources 301-303, ticket management service 310, and standardized ticket objects 342. Ticket management service 310 further provides extract operation 320, link operation 322, and ticket generation operation 324.

In operation, ticket management service 310 obtains ticket objects from ticket sources 301-303, wherein each of ticket sources 301-303 correspond to different formats. In particular, ticket sources 301 correspond to a first format, ticket sources 302 correspond to a second format, and ticket sources 303 correspond to a third format. When the ticket objects are obtained, ticket management service 310 performs extract operation 320 to extract attributes from the ticket. In some examples, extract operation 320 may identify a format of the ticket and extract the data based on the format. In some examples, the different formats may comprise a different sequence of data, different data fields, different file types, or some other difference in format.

After the attributes are identified, ticket management service 310 further performs link operation 322 that is used to identify similar tickets, both resolved and unresolved, to the current ticket. For example, when extracting the attributes, ticket management service 310 may determine that the ticket is associated with one or more other tickets related to the same ticket type. The ticket type may define software tickets, licensing tickets, hardware tickets, or some other ticket identifier. In some implementations, ticket management service 310 may correlate similarities between tickets and determine when two tickets satisfy similarity criteria. Once met, ticket management service 310 may generate metadata that indicates the similarities between the tickets.

After identifying similar tickets, ticket management service 310 may perform ticket generation operation 324 that is used to generate standardized ticket objects 342. In some examples, once the attributes are extracted from the first, second, and third formats, the attributes may be organized and standardized into a standardized format associated with ticket management service 310. Additionally, ticket generation operation 324 may add information from similar tickets identified using link operation 322. This additional information or supplemental information may indicate responses to the similar tickets, users associated with the responses, timestamps associated with the responses, or some other information associated with the responses. As a result, when an administrator requests information associated with a particular ticket, ticket management service 310 may provide the attributes associated with the ticket and may further provide supplemental information from the related tickets.

In some examples, as standardized ticket objects 342 are generated, the ticket objects may be stored in a database, wherein information may be extracted from the tickets and provided as a summary to an administrator of the industrial environment. The extracted attributes may indicate the quantity of resolved and unresolved tickets, the quantity of tickets related to a particular topic, the quantity of tickets associated with varying severity levels in the environment, or some other information from the tickets. In some examples, ticket management service 310 may determine trends from standardized ticket objects 342, or trends of interest, for the administrator of the environment. These trends may include a rate at which tickets have been identified, the rate at which tickets have been resolved, the rate of tickets corresponding to a particular topic, or some other information. As the trends are determined, information about the trends may be provided to an administrator. For example, ticket management service 310 may determine that the frequency of tickets related to a particular topic exceeds a threshold. Responsive to identifying the trend, ticket management service 310 may generate a ticket summary that indicates the exceeded threshold. This may permit an administrator to identify any issues associated with the tickets and generate a plan to resolve the tickets.

Although demonstrated as generating standardized ticket objects 342 from other ticket objects, it should be understood that ticket management service 310 may generate tickets by automatically detecting ticket events. In one example, ticket management service 310 may monitor software agreements or contracts to determine an expiration date. Ticket management service 310 may then generate a ticket that identifies the expiring agreement and the date for expiration. In another example, ticket management service 310 may identify the installation of new equipment, identify life-span information associated with the new equipment (using internal sources, external sources, and the like), and generate one or more tickets that indicate life-span information for the equipment. For instance, a new motor may be installed in the environment. In response to the motor installation, ticket management service 310 may consult the internet or a database to identify life-span information for the motor, and may generate one or more tickets based on the life-span information.

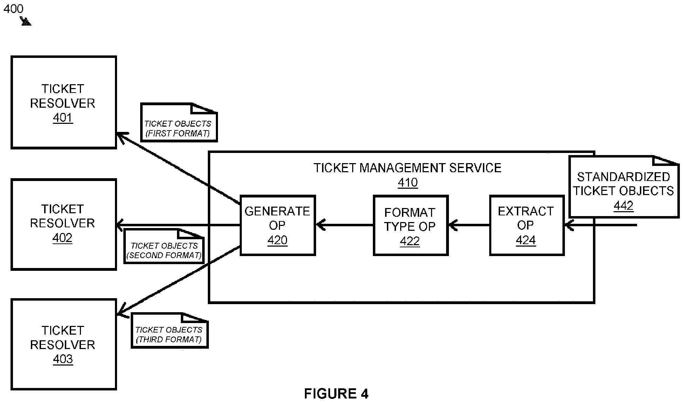

Figure 4 illustrates an operational scenario 400 of distributing tickets for an industrial environment according to an implementation. Operational scenario 400 includes ticket resolver 410-403, ticket management service 410, and standardized ticket objects 442. Ticket management service 410 further includes generate operation 420, format type operation 422, and extract operation 424.

In operation, users, administrators, and processes of an automation environment may generate tickets that correspond to the physical equipment and software in the environment. These tickets may be used to update software of a component of the environment, provide maintenance to a software or hardware component of the environment, manage service agreements for the components of the environment, or provide some other operation in association with the environment. Here, the tickets generated correspond to standardized ticket objects 442, which comprise tickets in a first format. The first format may include attributes in a particular format, a particular file type, or some other format related information. As standardized ticket objects 442 are obtained by ticket management service 410, ticket management service 410 may perform extract operation 424 that is used to extract relevant attributes from the ticket objects. In some examples, the attributes may include a ticket type or issue type, a component identifier associated with the ticket, information describing the issue, or some other attribute.

As the information is extracted, ticket management service 410 may further perform format type operation 422, which is used to determine what ticket resolver of ticket resolver 401-403 should be provided with the information for the ticket. For example, when a standardized ticket object indicates an issue with a particular component of a robotic arm, format type operation 422 may determine a vendor associated with the robotic arm and determine a ticket format that is associated with the vendor. Once determined, ticket management service 410 may perform generate operation 420 that is used to generate a ticket in the format associated with the vendor. In some examples, this may include assembling the attributes from the original ticket into a format associated with the vendor, generating a ticket in a file type expected by the vendor, or providing some other information. After generating the ticket, the ticket may be supplied to the corresponding ticket resolver. Ticket resolvers 401-403 may correspond to vendors or service providers that provide hardware and software components to an industrial automation environment.

In some examples, a standardized ticket object of standardized ticket objects 442 may result in the generation of multiple tickets that are supplied to various vendors. Returning to the example of the issue with the robotic arm, when the ticket is reported to ticket management service 410, ticket management service 410 may determine that the issue could correspond to multiple vendors or service suppliers. This may occur when an issue associated with the ticket may be caused by a component from multiple vendors, such as a software vendor and a hardware vendor for an equipment object. As a result, the attributes derived from the standardized ticket object may be used to generate a ticket in a first format that is associated with a first vendor, while the attributes may be used to generate an additional ticket in a second format associated with the second vendor.

In some implementations, ticket management service 410 may store the standardized ticket objects 442, such that they can be used to present a summary of the industrial environment. These summaries may be used to provide statistics about the various tickets in the environment, previews of the tickets in the environment, and relationships between tickets in the environment. In at least one example, as standardized ticket objects 442 are generated, ticket management service 410 may monitor the attributes within each of the tickets and determine when tickets meet similarity criteria. As a result, when a summary is presented to an administrator of the industrial environment, ticket management service may provide attributes of the current ticket, as well as information about previous tickets. This other information may include identifiers of users or administrators associated with the other tickets, solutions to the other tickets, any conversation logs, instant messages, or emails corresponding to the tickets, or some other information.

In some examples, ticket monitoring service 410 may further maintain information corresponding to the responses to the tickets. These responses may be provided manually from a user or administrator, may be provided based on an automated response, may be provided in accordance with a format associated with the ticket resolver or may be provided in some other manner. As the tickets are updated with additional information, such as responses, additional links may be generated that are used to couple the ticket with other tickets.

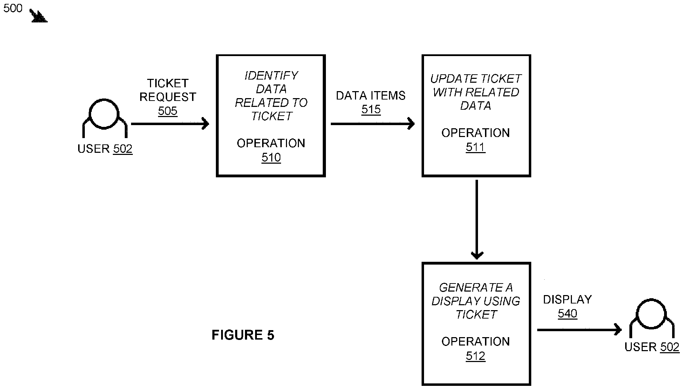

Figure 5 illustrates an operational scenario 500 of generating a ticket display according to an implementation. Operational scenario 500 includes user 502, ticket request 505, data items 515, display 540, and operations 510-512. Operations 510-512 are representative of operations that may be provided by a ticket management service, such as ticket management service 110, although other examples may exist.

As depicted, a user 502 associated with an industrial environment may generate ticket request 505 that is identified by a ticket management service. In response to identifying the request, the ticket management service may initiate operation 510 to identify data related to the ticket. In some examples, a user may be provided with a first user interface that indicates a list of tickets that have been submitted in relation to an industrial automation environment. From the list, the user may select a ticket of interest. When the ticket of interest is identified, attributes associated with the ticket may be identified, wherein the attributes may be derived from the original ticket and may include a time stamp associated with the ticket, a user identifier for the user that generated the ticket, a ticket type, a component identifier, descriptive information about any issues, or some other information about the ticket.

In some implementations, in addition to the data from the original ticket, the data gathered may also include supplementary data or related data gathered from other tickets, communications, or some other sources. The supplementary information may include responses to related tickets, communications related to other tickets, or some other supplementary information. To identify the supplementary information, the ticket management service may extract the attribute data from the current ticket and compare the attributes to those of other tickets. When the attributes meet similarity criteria, information or data from the similar tickets may be identified as related to the current ticket. The ticket management service may then use operation 511 to update the current ticket with the related data from the other tickets. For example, when user 502 selects a ticket to replace a physical component within the industrial automation environment, the ticket management service may identify tickets that are related to the same component or other similar components and determine data that might be relevant to the current ticket. This might include actions that were taken against the similar tickets, effectiveness information for the responses (identified by user feedback or an automated process), the users associated with the related tickets, any vendors associated with the related tickets, or some other information. In some examples, the most relevant related data may be promoted in the updated ticket, wherein the promotion may include highlighting, holding, placing higher in the ticket, or otherwise prioritizing the related data that is most relevant to the ticket. Once the updated ticket is generated, operation 512 may generate a display of the ticket that provides both the information for the ticket and the related ticket(s).

In some examples, the ticket management service may be used to provide additional information to user 502 regarding the tickets for the industrial automation environment. The additional information may correspond to trends in the environment, total numbers of resolved and unresolved tickets, users associated with the tickets, or some other information. In at least one implementation, the ticket management service may identify trends in the tickets and notify users of the trends. The trends may be identified based on the frequency of new tickets generated, the frequency that tickets are resolved, the frequency that tickets are identified in associated with a particular ticket type, or some other value. In some examples, the values identified from the tickets may be compared to criteria or thresholds to determine whether the values correspond to a trend of interest. For example, the ticket monitoring service may compare the frequency of newly generated tickets to a threshold value to determine whether the newly generated tickets correspond to a trend of interest. If a trend of interest is identified, a notification may be provided to a user either when a user requests a summary of the tickets or automatically.

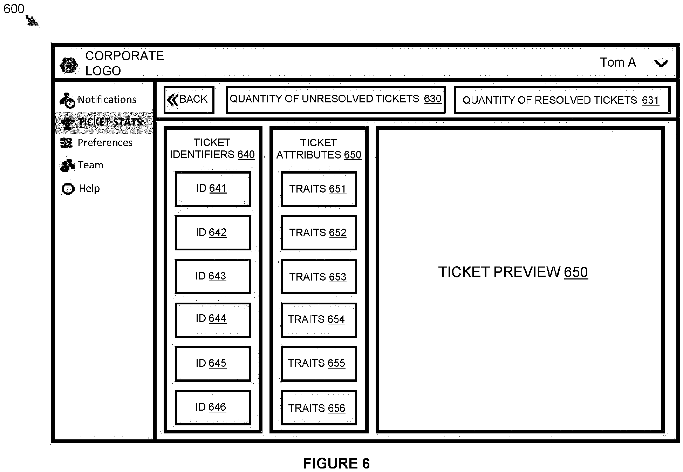

Figure 6 illustrates a user interface 600 to provide ticket information according to an implementation. User interface 600 includes ticket identifiers 640 with identifiers 641-646, ticket attributes 650 with traits 651-656, ticket preview 650, quantity of unresolved tickets 630, and quantity of resolved tickets 631.

In operation, a ticket management service may gather information corresponding to tickets generated for an industrial automation environment. The tickets may be generated based on updates, service requirements, equipment failures, or for some other purpose, and may be generated by users or may be generated using automated processes in the environment. As the tickets are generated, the tickets are aggregated into a common or standardized format that can be presented to a user or administrator associated with the environment. Here, user interface 600 is used to provide the user with a sample list of ticket identifiers, ticket attributes associated with the ticket identifiers, and a ticket preview associated with one of the tickets.

In some implementations, a user may login to the ticket management service and the ticket management service may generate user interface 600 responsive to the login. At the top of user interface 600, the display indicates statistics associated with tickets for the environment. As an example, user interface 600 includes quantity of unresolved tickets 630 and a quantity of resolved tickets 631, however, it should be understood that a user interface may include statistics regarding specific ticket types, users associated with the tickets, a resolution rate of the tickets, an incoming rate of new tickets, or some other information.

In addition to the general information for the tickets, user interface 600 further includes ticket identifiers 640, which represents a list of tickets for the environment and includes identifiers 641-646 that correspond to different tickets for the industrial automation environment. Next to ticket identifiers 640 is ticket attributes 650, which may include sample information corresponding to the particular ticket. In particular, for each ticket associated with ticket identifiers 641-646, traits 651-656 are provided, wherein the traits may identify the type of ticket, the time stamp associated with the ticket, the severity level of the ticket, or some other information related to the ticket. When a ticket is selected or highlighted by the user, ticket preview 650 is displayed that can provide additional information about the selected ticket. The information may identify users associated with the ticket, a brief description of the issue associated with the ticket, or some other information associated with the ticket. Thus, if a user selected the ticket associated with identifier 643. then additional attributes associated with the ticket may be provided in ticket preview 650. In some examples, in addition to providing a preview, the user may double-click on the identifier, select the ticket preview, or provide some other indication that further information about the ticket is requested. Once requested, the ticket management service may generate a new interface that permits a user to navigate the entire ticket and may further provide information about similar tickets identified using similarity criteria or thresholds.

Although Figure 6 provides one example of a user interface that could be provided to an administrator or user, it should be understood that a user interface may provide ticket information using a variety of other formats. The tickets may be provided as a list, as a tree indicating relationships between the various tickets, or in some other format. In some implementations, the user may sort or search the tickets that are stored in the database provided by the ticket management service. For example, to identify specific tickets, a user may sort ticket attributes 650 to identify relevant tickets. Thus, if ticket attributes were organized into multiple columns, a user may select a column (such as ticket priority level) and define how the column should be organized.

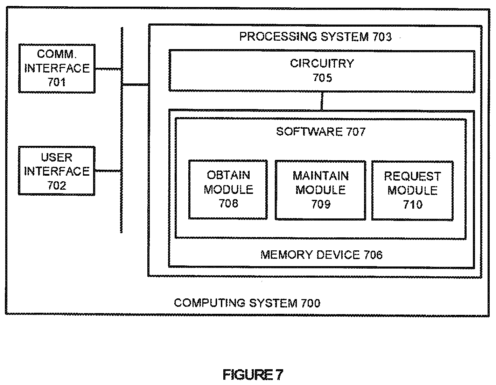

Figure 7 illustrates a ticket management computing system 700 according to an implementation. Computing system 700 is representative of any computing system or systems with which the various operational architectures, processes, scenarios, and sequences disclosed herein for an event comparison service may be implemented. Computing system 700 is an example of ticket management service 110, 310, and 410, although other examples may exist. Computing system 700 comprises communication interface 701, user interface 702, and processing system 703. Processing system 703 is linked to communication interface 701 and user interface 702. Processing system 703 includes processing circuitry 705 and memory device 706 that stores operating software 707. Computing system 700 may include other well-known components such as a battery and enclosure that are not shown for clarity.

Communication interface 701 comprises components that communicate over communication links, such as network cards, ports, radio frequency (RF), processing circuitry and software, or some other communication devices. Communication interface 701 may be configured to communicate over metallic, wireless, or optical links. Communication interface 701 may be configured to use Time Division Multiplex (TDM), Internet Protocol (IP), Ethernet, optical networking, wireless protocols, communication signaling, or some other communication format - including combinations thereof. In some implementations, communication interface 701 may be configured to obtain ticket objects from a variety of ticket management sources and obtain supplemental information from supplemental sources, such as email servers, chat servers, and the like.

User interface 702 comprises components that interact with a user to receive user inputs and to present media and/or information. User interface 702 may include a speaker, microphone, buttons, lights, display screen, touch screen, touch pad, scroll wheel, communication port, or some other user input/output apparatus - including combinations thereof. User interface 702 may be omitted in some examples.

Processing circuitry 705 comprises microprocessor and other circuitry that retrieves and executes operating software 707 from memory device 706. Memory device 706 may include volatile and nonvolatile, removable and non-removable media implemented in any method or technology for storage of information, such as computer readable instructions, data structures, program modules, or other data. Memory device 706 may be implemented as a single storage device but may also be implemented across multiple storage devices or sub-systems. Memory device 706 may comprise additional elements, such as a controller to read operating software 707. Examples of storage media include random access memory, read only memory, magnetic disks, optical disks, and flash memory, as well as any combination or variation thereof, or any other type of storage media. In some implementations, the storage media may be a non-transitory storage media. In some instances, at least a portion of the storage media may be transitory. It should be understood that in no case is the storage media a propagated signal.

Processing circuitry 705 is typically mounted on a circuit board that may also hold memory device 706 and portions of communication interface 701 and user interface 702. Operating software 707 comprises computer programs, firmware, or some other form of machine-readable program instructions. Operating software 707 includes obtain module 708, maintain module 709, and request module 710, although any number of software modules may provide the same operation. Operating software 707 may further include an operating system, utilities, drivers, network interfaces, applications, or some other type of software. When executed by processing circuitry 705, operating software 707 directs processing system 703 to Operate computing system 700 as described herein.

In one implementation, obtain module 708 directs processing system 703 to obtain tickets from one or more sources, wherein the sources may comprise servers, desktop computers, smartphones, or any other computing element capable of generating or maintaining tickets associated with an industrial automation environment. The tickets may be generated by users of the environment, by automated processes operating in the environment, or by some other means. In some implementations, the tickets obtained from the various sources may correspond to different formats, wherein a ticket generated in association with a first component (physical or software) may comprise a first format, while a ticket generated in association with another component may comprise a second format.

As the tickets are obtained, maintain module 709 directs processing system 703 to maintain a data structure or database that includes the tickets from the various sources. In some implementations, maintain module 709 may extract attributes from each of the obtained tickets and generate a new ticket based on the extracted attributes in a unified format. This unified format may be used to combine tickets from multiple sources that may use two or more different formats. In formatting the ticket into a unified format, maintain module may order the attributes of the ticket into a standardized sequence, may standardizing any values associated with the attributes (e.g., severity ratings or importance values), generate a standardized file format for the ticket, or provide some other operation. Once generated, the ticket may be stored with other tickets in the database.

In some implementations, as the various tickets are stored in the database, maintain module 709 may further identify supplemental information that can be linked or added to the ticket. The supplemental information may be gathered from other tickets, may be gathered from email or communication servers, or may be gathered in some other manner. To identify relevant supplemental information, attributes of the current ticket may be compared to attributes in the other data objects. When similarity criteria is met, supplemental information may be added to the ticket or linked from the ticket, wherein the supplemental information may include responses to the similar tickets, users associated with the similar tickets, or some other information from the related tickets. For example, a response to a previous ticket may have indicated a part purchase or series of purchases that were able to resolve a similar ticket. As a result, the similar tickets response may be associated with or added to a current ticket to provide suggestions on how to respond to the current ticket.

In addition to maintaining a database for the tickets, request module 710 may be used to respond to requests for summaries of the tickets. In some examples, the summaries may indicate an identifier for one or more tickets, attributes of the one or more tickets, and supplemental information that may have been added to the one or more tickets. In some examples, the summaries may, in addition to or in place of the information for the tickets, may provide statistical information for the summaries that have been obtained by computing system 700. The statistical information may correspond to unresolved tickets, resolved tickets, or a combination of both. The statistical information may indicate a rate at which the tickets are generated for the industrial environment, the rate at which tickets are resolved for the industrial environment, the rate at which tickets correspond to a particular ticket type, the resolution rate associated with a particular ticket type, or some other statistical information associated with the tickets with the industrial environment.

In some examples, statistical information may be provided in a summary, or promoted in a summary, based on whether the statistical information satisfies a threshold or criteria defined for the environment. For example, computing system 700 may monitor the rate or frequency that new tickets are generated for the environment. As the rate is monitored, computing system 700 may determine when the rate satisfies a threshold and update a summary based on the rate satisfying the threshold. This update may include placing the rate higher on the user interface for the summary, bolding the rate, providing the rate in a different sized font, or providing some other operation to promote the statistical value.

Although demonstrated in the previous example as generating a summary when requested by a user of the industrial environment, it should be understood that a summary may be generated without a request from a user. A summary may be generated when one or more tickets are identified with a requisite severity level, when statistical information satisfies a threshold or criteria, when a new ticket is identified, or in response to some other condition. When the condition is satisfied, computing system 700 may provide a notification, such as an email, a text message, or some other notification to a user associated with the industrial environment.

In some examples, computing system 700 may be responsible for splitting a ticket into multiple tickets as part of a division event. In particular, when a ticket is generated in a first format, maintain module 709 may be used to convert the ticket into two or more tickets that could be associated with different formats. In converting the ticket, computing system 700 may identify attributes within the ticket and compare the attributes from other tickets and/or data sources. As an example, a first ticket for a robotic component may be generated when an issue is identified for the robotic component. When the first ticket is identified by computing system 700, computing system 700 may identify attributes associated with the robotic component and compare the attributes to previously resolved tickets or other resources to determine what new or additional tickets should be generated (division event). For example, if a physical failure of the robotic component as a whole could be sourced to two individual components, computing system 700 may generate two tickets that correspond to each of the components. In generating the two new tickets, computing system 700 may determine the vendors associated with the components, determine ticket formats associated with the vendors, and generate tickets in the formats associated with the vendors.

When responses are generated in association with the new tickets, maintain module 709 may update the ticket database indicating the responses to the tickets. In some examples, maintain module 709 may maintain a common format for the tickets, wherein each ticket generated and supplied to the vendors is stored as a single format that can be updated with information about responses, information about how a ticket was resolved, or some other information. The information may be manually provided by a user associated with the ticket, may be updated based on vendor responses, may be updated based on automated processes that monitor components associated with the ticket, or may be provided in any other manner.

In at least some examples, rather than maintaining user generated tickets, maintain module 709 may further generate tickets based on the equipment and/or services that are added to the environment. As an example, maintain module may identify when new services or equipment are added to the environment (manually provided by a user or inspection of connected devices or services), may determine life-span information associated with the newly added service or equipment, and generate tickets based on the life-span information. The life-span information may be provided from databases, contracts, statistics from other environments, the internet, or some other source.

Returning to the elements of Figure 1, ticket sources 122 and supplemental sources 124 may each comprise one.or more computing systems (such as desktop computers, server computers, laptop computers, and the like) for a particular contractor, company, or some other similar information source. These computing systems may each comprise one or more communication interfaces and network interfaces, processing systems, computer systems, microprocessors, storage systems, storage media, or some other processing devices or software systems.

Ticket management service 110 may comprise communication interfaces and network interfaces, processing systems, computer systems, microprocessors, storage systems, storage media, or some other processing devices or software systems, and can be distributed among multiple devices. Ticket management service 110 may include software such as an operating system, logs, databases, utilities, drivers, networking software, and other software stored on a computer-readable medium. Ticket management service 110 may comprise one or more serving computing systems, desktop computing systems, or some other similar computing system.

Communication between ticket management service 110 and sources 122 and 124 may use metal, glass, optical, air, space, or some other material as the transport media. Communication between the host computing system and other computing nodes 130 may use various communication protocols, such as Time Division Multiplex (TDM), asynchronous transfer mode (ATM), Internet Protocol (IP), Ethernet, synchronous optical networking (SONET), hybrid fiber-coax (HFC), circuit-switched, communication signaling, wireless communications, or some other communication format, including combinations, improvements, or variations thereof. Communication between ticket management service 110 and sources 122 and 124 may be a direct link or can include intermediate networks, systems, or devices, and can include a logical network link transported over multiple physical links.

The included descriptions and figures depict specific implementations to teach those skilled in the art how to make and use the best option. For the purpose of teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.

### The following is a list of further preferred embodiments of the invention:

Embodiment 1. A method of managing tickets for an industrial automation environment comprising:
   obtaining a plurality of tickets from a plurality of data sources, wherein the plurality of tickets corresponds to two or more formats;
   extracting attributes from each ticket in the plurality of tickets;
   for each ticket in the plurality of tickets:
      generating at least one ticket in a unified format based on the extracted attributes;
      adding the at least one ticket to a ticket database; and
   generating a ticket summary based on the ticket database.
Embodiment 2. The method of embodiment 1, wherein extracting attributes from each ticket in the plurality of tickets comprises extracting at least a ticket identifier, a timestamp, and ticket type identifier.
Embodiment 3. The method of embodiment 1, wherein the two or more formats correspond to two or more vendors of components to an industrial environment.
Embodiment 4. The method of embodiment 3, wherein the components comprise hardware and software components.
Embodiment 5. The method of embodiment 1, wherein generating the ticket summary based on the ticket database comprises:
   obtaining a request for a ticket summary from a user associated with the industrial automation environment; and
   generating the ticket summary based on the ticket database in response to the request.
Embodiment 6. The method of embodiment 1, wherein generating the ticket summary based on the ticket database comprises:
   identifying one or more trends in the plurality of tickets based on the ticket database;
   generating the ticket summary based on the identified one or more trends.
Embodiment 7. The method of embodiment 6, wherein identifying the one or more trends in the plurality of tickets based on the ticket database comprises identifying that a frequency of resolved tickets satisfies a frequency threshold, a frequency of unresolved tickets satisfies a frequency threshold, or a frequency of tickets associated with a particular ticket type satisfies a frequency threshold, and wherein the ticket summary indicates the frequency that satisfied a frequency threshold.
Embodiment 8. The method of embodiment 7 further comprising providing the summary as a notification to a user associated with the industrial automation environment.
Embodiment 9. The method of embodiment 8, wherein the notification comprises an email, an instant message, or a text message.
Embodiment 10. A computing apparatus comprising:
   a storage system;
   a processing system operatively coupled to the storage system; and
   program instructions stored on the storage system to manage tickets in an industrial automation environment that, when executed by the processing system, direct the processing system to:
      obtain a plurality of tickets from a plurality of data sources, wherein the plurality of tickets corresponds to two or more formats;
      extract attributes from each ticket in the plurality of tickets;
      for each ticket in the plurality of tickets:
         generate at least one ticket in a unified format based on the extracted attributes;
         add the at least one ticket to a ticket database; and
      generate a ticket summary based on the ticket database.
Embodiment 11. The computing apparatus of embodiment 10, wherein the two or more formats correspond to two or more vendors of components to an industrial environment.
Embodiment 12. The computing apparatus of embodiment 11, wherein the components comprise hardware and software components.
Embodiment 13. The computing apparatus of embodiment 10, wherein generating the ticket summary based on the ticket database comprises:
   obtaining a request for a ticket summary from a user associated with the industrial automation environment; and
   generating the ticket summary based on the ticket database in response to the request.
Embodiment 14. The computing apparatus of embodiment 10, wherein generating the ticket summary based on the ticket database comprises:
   identifying one or more trends in the plurality of tickets based on the ticket database;
   generating the ticket summary based on the identified one or more trends.
Embodiment 15. The computing apparatus of embodiment 14, wherein identifying the one or more trends in the plurality of tickets based on the ticket database comprises identifying that a frequency of resolved tickets satisfies a frequency threshold, a frequency of unresolved tickets satisfies a frequency threshold, or a frequency of tickets associated with a particular ticket type satisfies a frequency threshold, and wherein the ticket summary indicates the frequency that satisfied a frequency threshold.
Embodiment 16. A method comprising:
   obtaining a ticket from a ticket source;
   extracting one or more attributes from the ticket;
   obtaining supplemental information associated with the ticket based on the extracted attributes;
   determining a division event for the ticket based on the supplemental information; and
   in response to the division event, generating two or more tickets based on the supplemental information.
Embodiment 17. The method of embodiment 16 further comprising providing the two or more tickets to two or more vendors of components in the industrial automation environment.
Embodiment 18. The method of embodiment 16, wherein the ticket corresponds to fault with one or more components in the industrial automation environment.
Embodiment 19. The method of embodiment 16, wherein the first ticket comprises a first ticket format, and wherein the two or more tickets comprise two or more second formats.
Embodiment 20. The method of embodiment 16, wherein the supplemental information comprises at least resolved or unresolved tickets stored in a ticket database for the industrial automation environment.

## Claims

1. A method of managing tickets for an industrial automation environment comprising:
obtaining a plurality of tickets from a plurality of data sources, wherein the plurality of tickets corresponds to two or more formats;
extracting attributes from each ticket in the plurality of tickets;
for each ticket in the plurality of tickets:
generating at least one ticket in a unified format based on the extracted attributes;
adding the at least one ticket to a ticket database; and
generating a ticket summary based on the ticket database.

2. The method of claim 1, wherein extracting attributes from each ticket in the plurality of tickets comprises extracting at least a ticket identifier, a timestamp, and ticket type identifier.

3. The method of claim 1 or 2, wherein the two or more formats correspond to two or more vendors of components to an industrial environment.

4. The method of claim 3, wherein the components comprise hardware and software components.

5. The method of one of claims 1 to 4, wherein generating the ticket summary based on the ticket database comprises:
obtaining a request for a ticket summary from a user associated with the industrial automation environment; and
generating the ticket summary based on the ticket database in response to the request.

6. The method of one of claims 1 to 5, wherein generating the ticket summary based on the ticket database comprises:
identifying one or more trends in the plurality of tickets based on the ticket database;
generating the ticket summary based on the identified one or more trends.

7. The method of claim 6, wherein identifying the one or more trends in the plurality of tickets based on the ticket database comprises identifying that a frequency of resolved tickets satisfies a frequency threshold, a frequency of unresolved tickets satisfies a frequency threshold, or a frequency of tickets associated with a particular ticket type satisfies a frequency threshold, and wherein the ticket summary indicates the frequency that satisfied a frequency threshold.

8. The method of claim 7 further comprising providing the summary as a notification to a user associated with the industrial automation environment; and/or
wherein the notification comprises an email, an instant message, or a text message.

9. A computing apparatus comprising:
a storage system;
a processing system operatively coupled to the storage system; and
program instructions stored on the storage system to manage tickets in an industrial automation environment that, when executed by the processing system, direct the processing system to:
obtain a plurality of tickets from a plurality of data sources, wherein the plurality of tickets corresponds to two or more formats;
extract attributes from each ticket in the plurality of tickets;
for each ticket in the plurality of tickets:
generate at least one ticket in a unified format based on the extracted attributes;
add the at least one ticket to a ticket database; and
generate a ticket summary based on the ticket database.

10. The computing apparatus of claim 9, wherein the two or more formats correspond to two or more vendors of components to an industrial environment.

11. The computing apparatus of claim 10, wherein the components comprise hardware and software components.

12. The computing apparatus of claim 9 or 10, wherein generating the ticket summary based on the ticket database comprises:
obtaining a request for a ticket summary from a user associated with the industrial automation environment; and
generating the ticket summary based on the ticket database in response to the request.

13. The computing apparatus of one of claims 9 to 12, wherein generating the ticket summary based on the ticket database comprises:
identifying one or more trends in the plurality of tickets based on the ticket database;
generating the ticket summary based on the identified one or more trends; and/or
wherein identifying the one or more trends in the plurality of tickets based on the ticket database comprises identifying that a frequency of resolved tickets satisfies a frequency threshold, a frequency of unresolved tickets satisfies a frequency threshold, or a frequency of tickets associated with a particular ticket type satisfies a frequency threshold, and wherein the ticket summary indicates the frequency that satisfied a frequency threshold.

14. A method comprising:
obtaining a ticket from a ticket source;
extracting one or more attributes from the ticket;
obtaining supplemental information associated with the ticket based on the extracted attributes;
determining a division event for the ticket based on the supplemental information; and
in response to the division event, generating two or more tickets based on the supplemental information.

15. The method of claim 14 further comprising providing the two or more tickets to two or more vendors of components in the industrial automation environment; or
wherein the ticket corresponds to fault with one or more components in the industrial automation environment; or
wherein the first ticket comprises a first ticket format, and wherein the two or more tickets comprise two or more second formats; or
wherein the supplemental information comprises at least resolved or unresolved tickets stored in a ticket database for the industrial automation environment.
